Europäisches Patentamt

European Patent Office

Office européen des brevets

(11) Publication number: 0 248 164
A2

# (12) EUROPEAN PATENT APPLICATION

(21) Application number: 87104795.7

(22) Date of filing: 01.04.87

(51) Int. Cl.4: **B60C 9/18** , B60C 9/20

(30) Priority: 02.06.86 US 869632

(43) Date of publication of application:
09.12.87 Bulletin 87/50

(84) Designated Contracting States:
DE ES FR GB IT LU

(71) Applicant: THE FIRESTONE TIRE & RUBBER
COMPANY
1200 Firestone Parkway
Akron, Ohio 44317(US)

(72) Inventor: Roland, C. Michael
324 Eutaw Forest Drive
Waldorf Maryland 20601(US)
Inventor: Schonfeld, Steven E.
702 N. Revere Road
Akron Ohio 44313(US)
Inventor: Bohm, G. G. A.
1212 Sunset View Drive
Akron Ohio 44313(US)
Inventor: Futamura, Shingo
642 Tanbark Lane
Wadsworth Ohio 44281(US)

(74) Representative: von Raffay, Vincenz, Dipl.-Ing.
et al
Patentanwälte Raffay, Fleck & Partner
Postfach 32 32 17
D-2000 Hamburg 13(DE)

(54) Breaker structure.

(57) Improved breaker structures employed between the carcass and tread portion of a pneumatic tire. The breaker comprises a layer of rubber matrix having a modulus of elasticity of from about 30 to 200 MPa and a plurality of reinforcing filaments having an angular disposition relative to the median plane of the tire.

FIG. 1

## BREAKER STRUCTURE

### TECHNICAL FIELD

This invention relates to a breaker structure which is utilized as a structural reinforcement member in a vehicle tire. Specifically, the instant invention relates to a unique breaker structure to be interposed between the carcass and tread of a tire. The breaker is comprised of an elastomeric material having a 10 percent modulus of between about 30 and 200 megapascals and is reinforced with essentially inextensible cords.

### BACKGROUND OF THE INVENTION

The use of a reinforcing breaker structure in tire construction has been known to the art since at least the 1940s and is now commonly employed in all radial passenger tires. These breakers, alternatively referred to as belts, bands, breaker plies or tread plies, encircle or girth the tire carcass in what is known as the crown area of the tire and are designed to be flexible yet relatively inextensible. The latter property results from inextensible reinforcing cords including synthetic fibers such as polyesters, fiberglass and the like and steel usually in the form of wire or wire cables and customarily plated. One early patent, No. 2,811,998 discloses such a tire which contains two layers of metallic reinforced plies between the carcass and tread, the plies comprising rubber having a modulus of elasticity substantially higher than the rubber in the side walls and tread.

U.S. Pat. No. 2,826,233, also discloses an early tire construction employing a circumferentially extending ply of steel cords coated with a resilient material and having at least one circumferentially extending sheet adjacent to and substantially co-extensive with the steel cord layer, the sheet being made of a synthetic organic polymer of high molecular weight and having a substantially greater sheer and tensile strength than that of the tread rubber.

U.S. Pat. No. 3,018,814 discloses another tire construction which employs a folded strip in engagement with an insert layer substantially of equal width thereto and comprising a composition of high elasticity modulus, preferably a composition incorporating therein filler material comprising textile and/or metallic fiber.

U.S. Pat. No. 3,773,096 provides an alternative to the reinforced band construction which employs an inner part entirely of rubber having a high modulus of elasticity and a thickness great enough to band the tire crown without reinforcement.

U.S. Pat. No. 3,842,885 discloses another breaker belt construction interposed between the tread and the tire carcass, the belt including opposing elastic layers with a sheet interposed between the layers, the sheet having a plurality of perforations therein and comprising a material such as stainless steel or aluminum having a relatively high modulus of elasticity with respect to the layers.

U.S. Pat. No. 4,111,249 discloses a pneumatic tire which is reinforced by a radially stabilized compression element such that the vehicle on which the tire is mounted can be operated safely in an essentially normal manner regardless of the state of pressurization of the tire. The compression element can be a solid flexible band of high strength metal or plastic and can comprise a layered construction having at least a pair of concentric metal bands which have a resilient material sandwiched therebetween. The invention is directed to providing a tire having run flat capabilities. Accordingly, the materials disclosed for use in the band structure have a tensile modulus of between 30,000 and 90,000 megapascals. The use of materials having such a high modulus results in tires that provide unacceptable performance in passenger vehicles. Specifically, the use of very high modulus materials in a tire produce unacceptable ride characteristics of the tire, namely poor obstacle enveloping characteristics.

European Patent Application No. 83104328.6 discloses a modified breaker for tires which have a radial carcass and are produced according to the traditional method of building and which structure reduces the absorption of horse power during tire operation. The breaker comprises a layer of cords which are resistant to tension and which are circumferentially disposed with respect to the tire. The cords are rubberized with an elastic material having a high modulus of rigidity with respect to shear stresses as well as a low hysteretic loss. The material is characterized by the capability of maintaining the variability of its physical characteristics within a predetermined range of values during the service life of the tire. The belt materials disclosed in this application preferably have a shear modulus between 25 and 35 megapascals. It is known that a tire constructed according to the teachings of this patent has serious deficiencies in its handling characteristics.

European Patent Application No. 83630122.6 relates to a pneumatic radial tire having a plurality of annular semi-rigid bands disposed in the crown portion of the tire. The bands, which comprise a fiber reinforcement embedded in an epoxy resin matrix, are sufficiently rigid to provide load support when the tire is in the inflated condition but are sufficiently flexible so as to flatten when in the footprint of the tire.

In conventional constructions, a rubber matrix has been combined with a cord component to provide a reinforcing band for the tire. The stress strain characteristics of cord in rubber are more dissimilar than most composite components. The cord component is a high strength element with relatively low elongation, while the rubber matrix is relatively low in strength with a high elongation. The ratio of ultimate cord stress to ultimate rubber matrix stress is approximately 50 which is in comparison with most composites.

Thus, in the case of the typical breaker construction, i.e., a rubber matrix belt having cords disposed therein, the reinforcing cords carry a majority of the structural load. The rubber matrix transmits the load to the reinforcing cord through a shear action. The performance of the composite is thus highly dependent upon the properties of the reinforcing cords and their arrangement in the tire.

It has generally been found that the longitudinal and transverse moduli of a cord rubber composite is a function of the cord volume fraction of the cord rubber composite and therefore as the cord volume fraction increases, the moduli, both transverse and longitudinal, also increase. Accordingly, when a high performance tire is desired, a cord rubber composite employing a high cord volume fraction is conventionally chosen in order to provide a cord rubber component having increased longitudinal and transverse moduli to provide the belt stiffness conventionally deemed necessary to provide the increased performance requirements.

One of the tradeoffs, however, in increasing the cord volume fraction of the cord rubber composite is a substantial increase in the cost of the tire due to the increased use of cord material which is relatively more expensive than rubber matrix materials. An additional expense is due to the manufacturing processes required for the fabrication of a cord rubber composite having a high cord volume fraction. This increased cost prevents the use of a cord rubber composite having a high cord volume fraction from being generally adopted.

There is, therefore, a need for a cord rubber composite structure which may be employed in a breaker to provide high performance characteristics to the tire in which it is employed without requiring the use of a high cord volume fraction. The present invention provides such a cord rubber composite by employing a reduced end count cord construction in combination with a rubber matrix having a modulus approximately ten times greater than that of conventional rubber skim stock resulting in a cord rubber composite which provides superior performance characteristics in a tire.

## SUMMARY OF THE INVENTION

In general, an improved breaker structure employed between the carcass and tread portion of a pneumatic tire comprises a layer of rubber matrix having a modulus of elasticity of from about 30 to 200 MPa and a plurality of reinforcing filaments having an angular disposition relative to the median plane of the tire.

## BRIEF DESCRIPTION OF THE DRAWINGS

Fig. 1 is a cross-sectional view of a pneumatic tire employing the breaker structure of the present invention;

Fig. 2 is a top plan view, partially in section, depicting the cord orientation in two belts having a bias angle of 70°;

Fig. 3 is a side elevation, taken substantially along the lines 3-3 in Fig. 2, depicting pantographing of the reinforcing cords at the belt edges;

Fig. 4 is a graphical depiction of the relationship of lateral force versus load from which is derived the cornering coefficient; and

Fig. 5 is a graphical depiction of the relationship of aligning torque versus load from which is derived the steering aligning torque.

## PREFERRED MODE FOR CARRYING OUT THE INVENTION

As noted hereinabove, it is standard practice in the tire industry to insert a reinforcing belt between the tread layer and the carcass in order to prolong the useful life of the tread and obtain desired handling characteristics. These belts or breaker plies are typically made of one or more layers of parallel strands of inextensible reinforcing cords, for example, steel wires, each embedded in an elastomeric material such as rubber and running in a complete circle or helix around the tire at an angle of typically 20° from the circumferential direction. Such a breaker structure helps to restrict changes in the shape of the tire surface due to the inextensible cord reinforcement. In addition, the breaker structure imparts stiffness to the tread region. By providing stiffness to the tread region, the breaker structure minimizes drag that accompanies the forward and reverse direction of the vehicle and improves the handling and cornering force.

The conventional breaker ply structure described above is typically manufactured by encapsulating a plurality of parallel cord members in a rubber matrix to form a sheet having the cords in parallel disposition therein. The sheet of fabric is then cut into strips at a bias angle wherein the width of such strips substantially corresponds to the width of the tread region of the tire. The biased cut strips of cord rubber matrix material are then manually joined end to end in order to form a roll of breaker material having the cords disposed at an angle with respect to the longitudinal edge of such breaker material. The breaker material, in roll form, thus produced is then applied to the tire carcass by severing a portion of the breaker material from the roll and manually applying it to the tire carcass, splicing the ends of the breaker material together.

The cords in a typical rubber/cord composite are of sufficiently greater modulus than the rubber that they behave effectively as if they were inextensible. Accordingly, upon deformation the cords do not stretch, but attempt to conform to the imposed deformation through a change in orientation. The orientation change is restricted by the rubber modulus; however, the existing belt designs contain features which limit the performance of the tire during high speed operation or after prolonged usage. Most notable is the fact that portions of the reinforcing cords will pantograph under load which gives rise to interply shear strains at the belt edge, can cause heat built up and ply separations to occur and eventual tire failure.

Use of a stiffer, rubber matrix in the belt of the present invention inhibits pantographing, as will be discussed hereinbelow which permits the use of a lower number of reinforcing cords in the belt. This is normally measured as ends per inch (EPI) and referred to as endcount. A lower endcount in the tread plies, or belts, would be an improvement not only from a cost consideration but also because there will be less crack initiation sites. Another benefit of a stiffer belt is the obtainment of higher highway speeds before the standing wave phenomenon occurs. The onset of standing waves occurs at high speeds and results in tire failure. In order not to limit the maximum speed of operation, it is desirable for the onset to occur at higher levels of speed than are normally encountered. Generally, the stiffer the tire, the higher the speed before standing waves occur.

The breaker plies or belts, are produced by calendering the rubber, known as a skim stock, generally to a thickness of approximately 60 to 70 mils (0.167 to 0.178 cm) with the reinforcing cord sandwiched therebetween. The rubber matrix component can be based on natural rubber alone or synthetic rubber or blends thereof as is discussed in greater detail hereinbelow.

The reinforcing cords can be selected from a variety of materials such as steel wire and cable, plated and unplated, and synthetic fibers such as rayon, aramid, fiberglass, polyesters and the like as monofilaments and braided strands. The number of filaments or cords employed in conventional belts has been governed by the stiffness required for the best performance. Balancing the number of cords, is the physical factor that sufficient rubber must be present for total envelopment, and the economic factor that elimination of one or more cord per inch effects a savings per tire. Of course, use of fewer cords or lighter weight cords, e.g., synthetics, effects a weight savings per tire which can aid improved mileage.

By examining a variety of radial passenger tires currently on the market in the U.S., it can be determined that the number of cords per inch or endcount, for steel wire reinforcement ranges between about 16 to 25. This amounts to a corresponding volume fraction range of from about 14 to 23 percent. By increasing the modulus of the rubber matrix, the endcount can be reduced to about 8 cords or a volume fraction of about 4 percent. A useful endcount range for practice of the present invention is about 8 to 25 per inch corresponding to a volume fraction of from about 4 to 23 percent.

Typically, the lower end volume fraction for existing belts comprising conventional rubber matrices and having steel reinforcement is about 9 to 10 percent. According to the present invention, it is possible to provide belts having volume fractions of steel reinforcement lower than 9 percent. As will be noted hereinbelow, when the volume fraction is maintained at the standard rate in belts of the present invention, greater performance characteristics are imparted to the tire.

In the instance of the synthetic fibers, an endcount for aramid fiber of about 18 and volume fraction of 8 percent is conventional which can be reduced respectively to about 8 and a corresponding volume fraction range of about 4 percent having an overall range of from about 4 to 13 percent. A useful endcount range is about 8 to 24 per inch. For polyester monofilament, the modulus has traditionally been considered too low to be utilized as a tread ply cord. With a high modulus skim stock, polyester cord endcounts of about 27 can be employed. A useful endcount range is about 17 to 35 per inch corresponding to a volume fraction in a range of from about 7 to 13 percent. Practice of the present invention thus can permit a reduction in the volume fraction of reinforcing cords or utilization of alternative fibers.

Regarding the rubber matrix, as noted hereinabove, the rubber component can be natural or synthetic rubber such as ethylene/propylene copolymers, ethylene/propylene/diene terpolymers, neoprene copolymers of a conjugated diene with at least one monoolefin and mixtures thereof with and without natural rubber.

The copolymers may be derived from conjugated dienes such as 1,3-butadiene, 2-methyl-1,3-butadiene(isoprene), 2,3-dimethyl-1,3-butadiene, 1,3-pentadiene, 1,3-hexadiene and the like, as well as mixtures of the foregoing dienes. The preferred conjugated dienes is 1,3-butadiene. Regarding the monoolefinic monomers, these include vinyl aromatic monomers such as styrene, alphamethyl styrene, vinyl naphthalene, vinyl pyridine and the like; alkyl acrylates or methacrylates such as methyl acrylate, ethyl acrylate, butyl acrylate, methyl methacrylate, butyl methacrylate and the like; unsaturated nitriles such as acrylonitrile, methacrylonitrile and the like and vinyl halides such as vinyl chloride, vinylidene chloride and the like as well as mixtures of the foregoing monoolefins. The copolymers may contain up to 50 percent by weight of the monoolefin based upon total weight of copolymer. The preferred copolymer is a copolymer of a conjugated diene, especially butadiene, and a vinyl aromatic hydrocarbon, especially styrene.

The above-described copolymers of conjugated dienes and their method of preparation are well known in the rubber and polymer arts. Many of the polymers and copolymers are commercially available. It is to be understood that practice of the present invention is not to be limited to any particular rubber included hereinabove or excluded. The rubber must be useful as a tire component and have a high modulus. If high modulus is not inherent as is true for natural rubber, then the rubber must be one to which high modulus can be imparted through compounding.

By high modulus is meant that the rubber compound has a modulus at 10 percent ranging from about 30 MPa to 200 MPa and preferably from 50 to 100 MPa. Most conventional rubbers and compounding stocks thereof have a modulus ranging between 4 or 5 MPa up to as high as about 10 MPa and therefore, the increase in modulus must come from compounding ingredients.

One manner in which the modulus of a natural rubber stock can be increased is by the addition of zinc dimethacrylate to the stock in an amount of from about 40 to 70 parts per 100 parts of rubber (phr). The preparation of a zinc dimethacrylate compound and its addition to a rubber polymer, e.g., natural or synthetic rubber, is described in a co-pending application owned by the Assignee of record herein.

It is to be understood that other compounds can be added to the rubber to increase modulus and that practice of the present invention is not limited to the use of zinc dimethacrylate. The compounded rubber stock employed should have a modulus of at least about 30 MPa. In the instance of zinc dimethacrylate and possibly other dry additives, where amounts exceed about 10 phr, a reduction in carbon black can be made in compensation therefor.

As an example of other suitable high modulus rubber compounds, three formulations have been provided in Table I: Compound 1 comprising 100 parts of natural rubber; Compound 2 comprising a blend of natural rubber and SBR; and, Compound 3 comprising a urethane rubber. All parts are presented on the basis of parts per hundred rubber by weight.

## TABLE I
### High Modulus Rubber Formulations

#### Compound 1

| | |
|---|---|
| Natural Rubber | 100 |
| HAF Black | 50 |
| FEF Black | 40 |
| Zinc Oxide | 8 |
| Stearic Acid | 3 |
| Durez Resin 13355[1] | 12 |
| NOBS Special accelerator[2] | 2 |
| Sulfur | 12 |

### Table I (Continued)
#### Compound 2

| | |
|---|---|
| Natural Rubber | 50 |
| SBR | 50 |
| HAF Black | 50 |
| Zinc Oxide | 7.5 |
| Stearic Acid | 0.5 |
| Process Oil | 10 |
| Monsanto SAN Resin #33[3] | 80 |
| NOBS Special accelerator[2] | 4.0 |
| Sulfur | 12 |
| Santogard PVI[4] | 0.5 |

#### Compound 3

| | |
|---|---|
| Adiprene L367 Urethane[5] | 100 |
| MBCA[6] | 19.2 |

1) Durez is a registered trademark of Hooker Chemical and Plastics Corp. for synthetic resins
2) N-oxydiethylene-2-benzothiazole-sulfenamide
3) Styrene-acrylonitrile resin
4) N-(cyclohexylthio)phthalimide
5) Adiprene is a registered trademark of Uniroyal Inc. for polyurethane rubber
6) 4,4'-methylenebis(2-chloroaniline)

In the examples which follow, a conventional natural rubber skim stock, Stock A, was prepared which did not contain any additives to increase modulus above the conventional range. This stock was reinforced with several different cord materials and calendered into belts of ± 68° from the meridinal direction having a thickness of 140 mils. A similar stock, Stock B, was also compounded which differed from Stock A primarily by the addition of 70 phr of zinc dimethacrylate. It was also reinforced with different cord materials at 68° and 72° orientation and calendered into belts.

Formulations for each stock are as follows with all parts given on the basis of parts per hundred rubber by weight.

| Compounding Ingredients | Stock A | Stock B |
| --- | --- | --- |
| Natural rubber (E grade) | 100 | 100 |
| HAF Black | 50 | --- |
| Zinc dimethacrylate | --- | 70 |
| Zinc Oxide | 5.0 | --- |
| Stearic Acid | 0.5 | --- |
| Santoflex DD[1] | 2.0 | --- |
| Aliphatic Hydrocarbon Resin | 2.0 | --- |
| Process Oil | 2.0 | --- |
| NOBS Special accelerator[2] | 0.6 | --- |
| Santoflex 13 AO[3] | 1.0 | --- |
| Sulfur MB[4] | 5.0 | --- |
| Santogard PVI[5] | 0.4 | --- |
| Sodium dodecyl sulfate | --- | 2 |
| Vulcup-R[6] | --- | 1.5 |
| HVA-2[7] | --- | 1.5 |

1) 6-dodecyl-1,2-dihydro-2,2,4-trimethylquinoline

2) N-oxydiethylene-2-benzothiazole-sulfenamide

3) N-(1,3-dimethylbutyl)-N'-phenyl-p-phenylenediamine

4) 80/20 sulfur/naphthenic oil

5) N-(cyclohexylthio)phthalimide

6) alpha,alpha'bis(t-butylperoxy)diisopropyl benzene

7) m-phenylene bis maleimide

It is to be understood that the foregoing compositions of rubber skim stocks have been presented solely to enable those skilled in the art to have at least one natural rubber skim stock with which to practice the invention. As such, the present invention is not to be limited only to these specific formulations. For greater detail regarding stocks containing zinc dimethacrylate, reference can be made to a copending application of the Assignee of record, Ser. No.         , the subject matter of which is incorporated herein by reference.

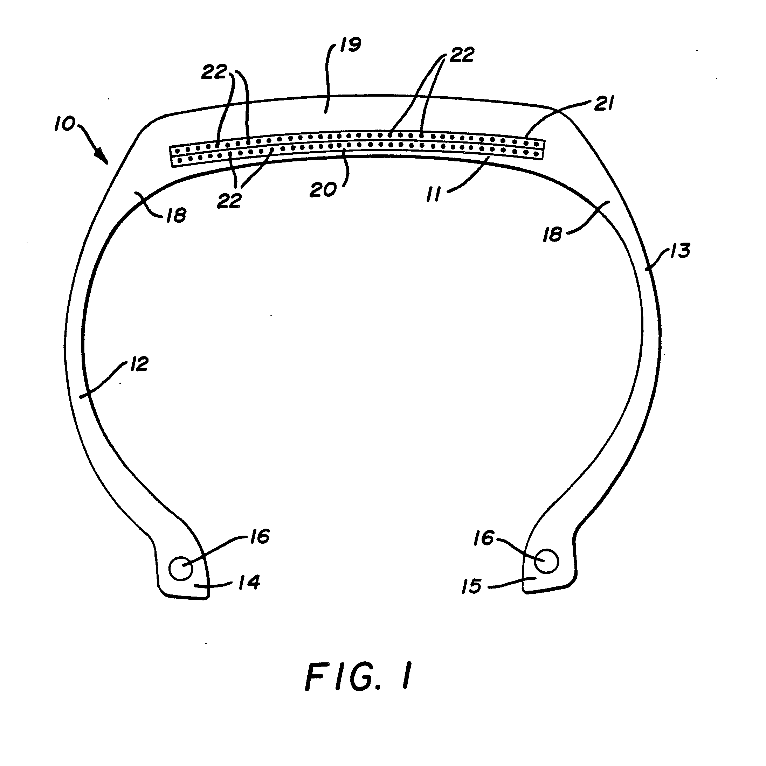

Belts from Stocks A and B were employed in a series of size P175/80R13 passenger tires which were, in turn, subjected to various tests reported hereinbelow. With reference to Fig. 1 a typical pneumatic tire 10 is shown in section to indicate location of the belts. The tire includes a body or carcass 11, side walls 12 and 13, beads 14 and 15, respectively and bead rings 16. The side walls terminate in the crown area 18 and the tread 19 is located therebetween. The tire 10 contains two breaker plies or belts 20 and 21 located between the carcass and the tread. Each belt contains a plurality of reinforcing cords 22.

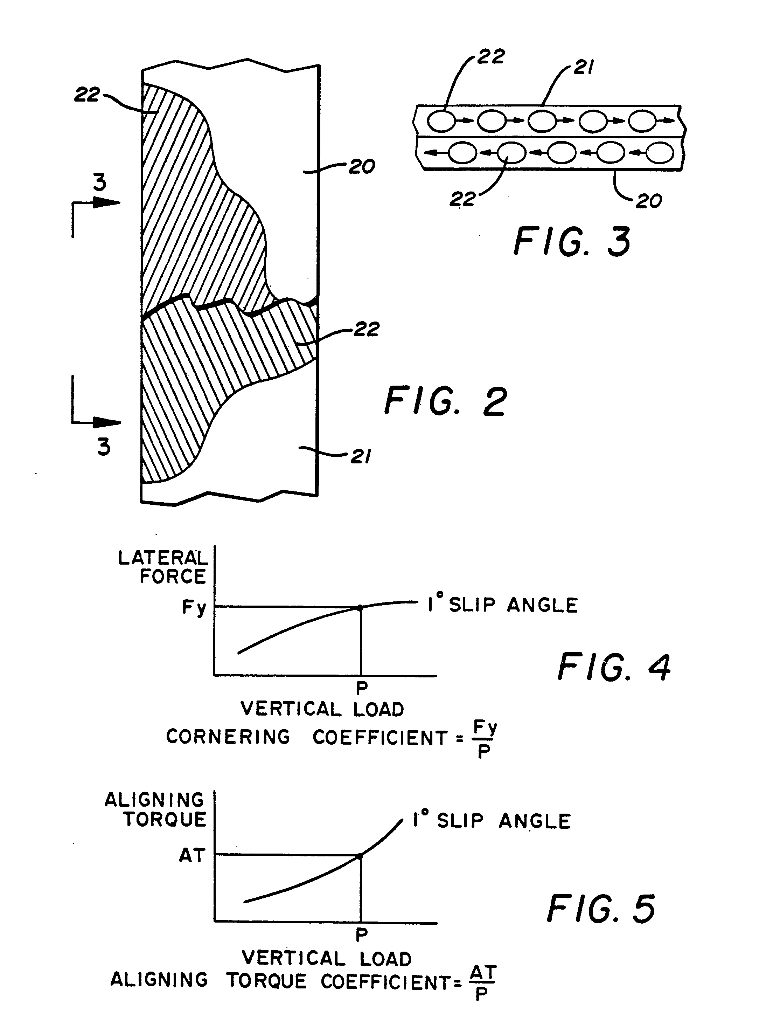

As is customary, the cords 22 from each belt are arranged in parallel configuration and at opposite angles of orientation, such as 70°, designated as ± 70° and depicted in Fig. 2. Other bias angles can be selected, according to the design of the tire and the desired performance and thus, practice of the present invention is not limited to a specific angle of orientation. It should also be understood that a typical radial tire contains other components and ply elements not shown in Fig. 1, in the interest of simplification. Thus, it will be appreciated by those skilled in the art that the belts of the present invention are not intended to be built into tires having only those elements presented hereinabove.

With further reference to Fig. 2, it is desirable that the orientation of the belt cords 22 remain fixed as shown during the manufacture, subsequent inflation of the tire and use of the tire particularly during cornering and as the tire encounters obstacles. Immobility of the cords 22, maintains the shape and integrity of the tire allowing the latter to perform as it was designed.

Undesirable pantographing is depicted in Fig. 3 wherein the ends of cords 22 in belts 20 and 21 move or attempt to move in the direction of the arrows, placing the surrounding rubber in shear. This development of interply shear strains at the belt edge can contribute to ply separation and rubber-to-cord separation.

Significance of the present invention should be evident inasmuch as by employing a rubber matrix of the correct, higher amount of modulus, greater stiffness of the belt is obtained permitting lower endcounts and/or lower modulus cord materials. It is to be remembered, these factors save money as well as weight of the tire. Alternatively, greater performance, e.g. , cornering ability and handling, can be achieved by maintaining the endcount where such performance dominates cost and weight considerations.

As will be seen in the tables which follow, the tires containing belts of the present invention performed as well or better than conventional belts.

The data in Table II presents 15 examples with various reinforcing filaments or cords and ends per inch (EPI) or endcounts. Examples 1-3 were reinforced with a 4 strand steel cord construction. Example 4 was reinforced with Kevlar, a fully aromatic polyamide generically known as the aramids. Kevlar is a registered trademark of E. I. duPont de Nemours & Co. Examples 5-7 were reinforced with polyester monofilaments, diameter = 0.026 in. (0.066 cm); Examples 8 and 9 were reinforced with round steel wire, diameter = 0.024 in. (0.061 cm); Examples 10-15 were reinforced with flat steel, 1 mm x 0.25 mm. Total cord stiffness has been reported for each of the examples which was determined by multiplying endcount times cord modulus times cord area. Two rubber skim stocks were employed, the conventional stock A, having a modulus of 8 MPa, and the high modulus stock B, having high modulus, i.e., 85 MPa. Finally, the cord endcount and cord angles have been noted.

## TABLE II

### Breaker Ply Construction

| Ex. No. | Cord Type | Total Cord Stiffness Kg/cm | Skim Stock | Endcount EPI | Cord Bias Angles |
|---|---|---|---|---|---|
| 1 | Steel (4) | 20,358 | A | 18 | 68° |
| 2 | Steel (4) | 20,358 | B | 18 | 68° |
| 3 | Steel (4) | 14,66● | B | 13 | 68° |
| 4 | Kevlar | 10,036 | B | 18 | 68° |
| 5 | Polyester Monofil | 3,053 | B | 19 | 68° |
| 6 | Polyester Monofil | 3,053 | B | 19 | 72° |
| 7 | Polyester Monofil | 4,339 | B | 27 | 72° |
| 8 | Round Steel | 28,930 | A | 18 | 68° |
| 9 | Round Steel | 28,930 | B | 18 | 68° |
| 10 | Flat Steel | 29,287 | A | 14 | 68° |
| 11 | Flat Steel | 20,893 | B | 10 | 68° |
| 12 | Flat Steel | 29,287 | B | 14 | 68° |
| 13 | Flat Steel | 37,680 | B | 18 | 68° |
| 14 | Flat Steel | 29,287 | B | 14 | 68° |
| 15 | Flat Steel | 29,287 | B | 14 | 68° |

The data in Table III presents four physical properties for the tires of Examples 1-15. These include the cornering force coefficient, the steering aligning torque (SAT) coefficient, rolling loss and plunger test. Each value is an average taken from several tires constructed for evaluation. Each tire contained two belts having a thickness of 70 mils (0.178 cm).

The cornering force is the lateral force developed by a tire which pushes a vehicle around a corner when a steer angle is introduced. The cornering coefficient is defined as the lateral force produced at one degree slip angle and 100 percent of the 24 psi (0.17 MPa) rated load, divided by the rated load. It has been depicted graphically in Fig. 2 where $Fy$ = lateral force and P = weight on one wheel. A higher coefficient is indicative of improved cornering.

The aligning torque is a moment which must be overcome to corner a vehicle or drive straight and is sensed at the steering wheel by the driver. The aligning torque coefficient is the aligning torque produced at one degree slip and 100 percent of the 24 psi (0.17 MPa) rated load, divided by the rated load. It has been depicted graphically in Fig. 3 where AT = aligning torque and P = the weight on one wheel.

Average rolling loss is a measure of the energy irreversibly expended as the tire rolls. A reduction in steel cord endcount results in a lower weight tire and therefore contributes to a lower rolling coefficient. All three coefficients reported in Table III were measured at a DOT standard load of 1025 lbs. (466 Kg) load. The first two are dimensionless values and the third is a measure of force reported in Newtons.

The plunger test is measured in inch-pounds and is another DOT standard requiring a one inch diameter (2.54 cm) steel bar with a round end to be driven into the tread of the test tire. The tire must withstand a load of 2600 inch-pounds (359.5 Kg-M) without puncture by the rod or bottoming of the tread on the rim mounting the tire. Measurements were not made for all 15 examples.

## TABLE III
### Breaker Ply Properties

| Ex. No. | Cord Type | Endcount EPI | Skim Stock | Average Corn. Force Coefficient (466 Kg) | Average Sat Coefficient (466 Kg) | Average Rolling Loss (N) | Plunger Energy (Kg-M) |
|---|---|---|---|---|---|---|---|
| 1 | Steel (4) | 18 | A | .167 | .022 | 56.5 | 725.8 |
| 2 | Steel (4) | 18 | B | .172 | .021 | 60.9 | 592.4 |
| 3 | Steel (4) | 13 | B | .174 | .021 | 58.7 | 367.2 |
| 4 | Kevlar | 18 | B | .156 | .018 | 60.5 | 788.0 |
| 5 | Polyester Monofil | 19 | B | .118 | .022 | 63.6 | 574.4 |
| 6 | Polyester Monofil | 19 | B | .124 | .022 | 62.3 | 584.7 |
| 7 | Polyester Monofil | 27 | B | .139 | .021 | 61.8 | 783.9 |
| 8 | Round Steel | 18 | A | .171 | .022 | 55.1 | |
| 9 | Round Steel | 18 | B | .180 | .022 | 57.8 | |
| 10 | Flat Steel | 14 | A | .171 | .022 | 55.1 | |
| 11 | Flat Steel | 10 | B | .174 | .022 | 57.8 | |
| 12 | Flat Steel | 14 | B | .179 | .022 | 58.7 | |
| 13 | Flat Steel | 18 | B | .175 | .020 | 61.4 | |
| 14 | Flat Steel | 14 | B | .172 | .022 | 56.5 | |
| 15 | Flat Steel | 14 | B | .178 | .021 | 59.1 | |

0 248 164

As can be noted from Table III, the cornering coefficient first improved between Examples 1 and 2 by substitution of the high modulus stock, B. A further improvement was observed for Example No. 3 by reducing the endcount to 13. Although the endcount was reduced by 5 cords or 27 percent, the increased coefficient was believed to be due to the stiffness with which the cords were held which resulted in a tread region of the tire that is stiffer with respect to the shearing and in-plane bending deformations critical to cornering maneuvers.

Steering aligning torque was essentially as good as the control indicating no loss. Rolling loss showed an improvement by substituting the high modulus stock. Plunger energy decreased somewhat between Examples 1 and 2, although both values greatly exceeded the required load. At the reduced endcount, Example No. 3 showed a loss in plunger energy, although an acceptable value, which is attributable to the greater spaces between adjacent steel cords.

Example No. 4 was conducted with only stock B inasmuch as known evaluations conducted elsewhere with a conventional stock had established lesser values than for steel cord. Nevertheless, the Kevlar reinforced high modulus stock showed higher coefficients than with a conventional rubber stock and a good rolling loss value was obtained as well as a very high plunger energy.

Examples 5 to 7 were also only evaluated here with stock B, inasmuch as the coefficients with a conventional rubber were previously known to be very low. For stock B, the tires showed somewhat improved cornering coefficients, which would be satisfactory in many countries outside of the United States. Aligning torque values were good as was true for rolling loss attributable, in part, to the lower weight. Plunger energy was very good.

The results of the remaining Examples are apparent from Table III and do not require further comment except to note that plunger energy was not deemed necessary since steel cords provide high energy as noted in the first set of Examples.

In the next three tables, tests measurements have been reported over a wider range of loads for seven additional examples, each including two tires. Table IV presents cornering force coefficients at five loads; Table V presents aligning coefficients also at five loads, and Table VI presents rolling resistance at three loads.

## TABLE IV
### Cornering Force Coefficients

| Ex. No. | Cord Type | Endcount EPI | Skim Stock | Tire No. | Load 186 Kg | Load 326 Kg | Load 466 Kg | Load 606 Kg | Load 746 Kg |
|---|---|---|---|---|---|---|---|---|---|
| 16 | Steel (4) | 18 | A | 1 | .235 | .218 | .167 | .121 | .093 |
|    |           |    |   | 2 | .229 | .212 | .165 | .122 | .093 |
| 17 | Steel (4) | 18 | B | 1 | .234 | .219 | .177 | .138 | .109 |
|    |           |    |   | 2 | .221 | .218 | .176 | .136 | .109 |
| 18 | Steel (4) | 13 | B | 1 | .228 | .225 | .183 | .141 | .110 |
|    |           |    |   | 2 | .224 | .220 | .177 | .137 | .109 |
| 19 | Kevlar    | 18 | B | 1 | .224 | .203 | .157 | .115 | .087 |
|    |           |    |   | 2 | .233 | .210 | .155 | .111 | .088 |
| 20 | Polyester Monofil | 19 | B | 1 | .212 | .172 | .116 | .074 | .057 |
|    |           |    |   | 2 | .218 | .176 | .120 | .078 | .059 |
| 21 | Polyester Monofil | 19 | B | 1 | .202 | .175 | .126 | .086 | .063 |
|    |           |    |   | 2 | .211 | .175 | .123 | .082 | .062 |
| 22 | Polyester Monofil | 27 | B | 1 | .218 | .194 | .141 | .098 | .074 |
|    |           |    |   | 2 | .210 | .189 | .136 | .094 | .073 |

TABLE V

Self-Aligning Torque Coefficients

| Ex. No. | Cord Type | Endcount EPI | Skim Stock | Tire No. | Load 186 Kg | Load 326 Kg | Load 466 Kg | Load 606 Kg | Load 746 Kg |
|---|---|---|---|---|---|---|---|---|---|
| 16 | Steel (4) | 18 | A | 1 | .010 | .019 | .021 | .022 | .022 |
|  |  |  |  | 2 | .010 | .016 | .019 | .021 | .023 |
| 17 | Steel (4) | 18 | B | 1 | .019 | .018 | .020 | .021 | .022 |
|  |  |  |  | 2 | .012 | .016 | .018 | .019 | .020 |
| 18 | Steel (4) | 13 | B | 1 | .009 | .020 | .021 | .020 | .022 |
|  |  |  |  | 2 | .010 | .019 | .019 | .019 | .020 |
| 19 | Kevlar | 18 | B | 1 | .012 | .016 | .018 | .019 | .019 |
|  |  |  |  | 2 | .012 | .017 | .019 | .020 | .019 |
| 20 | Polyester Monofil | 19 | B | 1 | .016 | .021 | .022 | .022 | .022 |
|  |  |  |  | 2 | .013 | .021 | .023 | .023 | .022 |
| 21 | Polyester Monofil | 19 | B | 1 | .014 | .019 | .021 | .021 | .021 |
|  |  |  |  | 2 | .018 | .022 | .023 | .023 | .022 |
| 22 | Polyester Monofil | 27 | B | 1 | .014 | .019 | .021 | .022 | .021 |
|  |  |  |  | 2 | .008 | .017 | .020 | .021 | .022 |

## TABLE VI
## Rolling Resistance

| Ex. No. | Cord Type | Endcount EPI | Skim Stock | Tire No. | Load[a] (N) | Load[b] (N) | Load[c] (N) |
|---|---|---|---|---|---|---|---|
| 16 | Steel (4) | 18 | A | 1 | 46.7 | 56.5 | 68.5 |
|    |           |    |   | 2 | 42.7 | 53.4 | 64.5 |
| 17 | Steel (4) | 18 | B | 1 | 50.7 | 60.0 | 72.0 |
|    |           |    |   | 2 | 48.5 | 60.5 | 73.4 |
| 18 | Steel (4) | 13 | B | 1 | 49.8 | 59.1 | 70.3 |
|    |           |    |   | 2 | 48.5 | 58.7 | 69.8 |
| 19 | Kevlar | 18 | B | 1 | 48.9 | 59.1 | 69.4 |
|    |        |    |   | 2 | 50.7 | 61.8 | 75.6 |
| 20 | Polyester Monofil | 19 | B | 1 | 49.4 | 62.3 | 76.0 |
|    |                   |    |   | 2 | 52.5 | 65.4 | 77.4 |
| 21 | Polyester Monofil | 19 | B | 1 | 50.7 | 62.3 | 73.4 |
|    |                   |    |   | 2 | 51.6 | 62.7 | 73.4 |
| 22 | Polyester Monofil | 27 | B | 1 | 51.1 | 62.3 | 73.8 |
|    |                   |    |   | 2 | 48.9 | 61.4 | 72.5 |

a)   at 375 Kg

b)   at 466 Kg

c)   at 552 Kg

As can be seen from Table IV, the cornering force coefficient generally increased between Examples 16 and 17 at all loads except the lightest by employing Stock B. Example No. 18 was further improved at all loads with Stock B and a reduced endcount. The Kevlar data, for Example No. 19, expanded upon that which was presented in Table III. Finally, by comparing Example No. 22 with either No. 20 or 21, it is seen that the higher endcount provided greater cornering coefficients.

By plotting the data in Table IV, with data for a control tire and comparing the curves, it can be observed that the experimental tires did not exhibit as marked a downward concavity as exhibited for control tires. The greater load sensitivity of the control tires means that there will be less net cornering force available to the vehicle since the load becomes unbalanced among the wheels during cornering.

For example, if one assumes a transfer of 450 lbs. (204.1 Kg) of vehicle weight from the inner to the outer wheels during a cornering maneuver, then the lateral force developed would be as follows:

### TABLE VII
#### Cornering and Lateral Forces

|  | Control Tire | High Modulus Belt Tire |
| --- | --- | --- |
| Cornering force on inner tire (N) | 576.3 | 587.0 |
| Cornering force on outer tire (N) | 690.2 | 773.8 |
| Net lateral force (N) | 1266.5 | 1360.8 |
| Net assuming no load transfer (N) | 1508.4 | 1556.5 |
| Net loss due to load transfer (N) | 240.1 | 195.7 |

The effect of the high modulus belt is an improved net cornering response. The nature of the load sensitivity of cornering can also influence the stability of the vehicle during harsh maneuvers, since turning moments can develop from the imbalance of lateral forces.

As can be seen from Table V, no significant loss in the steering aligning torque was observed between Example No. 16 and Example No. 17 or Example No. 18 despite use of Stock B and reducing the endcount. The Kevlar data, again expanded upon the data presented in Table III and it can be noted that at certain loads, this tire produced values very close to Example No. 18. The increased endcount of polyester cord in Example No. 22 appeared to have little effect over the lower endcount of Examples No. 20 and 21.

Finally, as can be seen from Table VI, the rolling resistance improved between Examples No. 16 and 17 by use of Stock B at all loads. In Example No. 18, a slight improvement was observed at 375 Kg, about the same resistance was observed at 466 Kg and a slight decrease occurred at 552 Kg. The Kevlar data provided good rolling resistances as did the polyester cord data, which was attributable to the use of lighter weight cord reinforcement.

In conclusion, it should be clear from the foregoing examples and specification disclosure that the breaker structure of the present invention exhibits improved physical properties as compared to conventional breakers that do not contain a high modulus rubber matrix. The increase in modulus also allows lower endcounts thereby saving weight and cost of the cords. Compared to the conventional breaker structure, the breakers of the present invention contain an average reduction in the cord volume fraction of approximately 28 percent.

It is to be understood that the use of high modulus rubber is not limited to the natural rubber formulations containing zinc dimethacrylate exemplified herein or by the disclosure of typical rubber polymers provided herein, the examples having been provided merely to demonstrate practice of the subject invention. Those skilled in the art may readily select other high modulus rubbers, according to the disclosure made hereinabove.

Similarly, practice of the process of the present invention should not be limited to a particular cord reinforcement material or endcount or bias angle from the exemplification it being understood by those skilled in the art that accommodations can be made within the spirit of the invention for differences in equipment as well as in the desired composition and physical properties of the tire band.

Thus, it is believed that any of the variables disclosed herein can readily be determined and controlled without departing from the scope of the invention herein disclosed and described. Moreover, the scope of the invention shall include all modifications and variations that fall within the scope of the attached claims.

**Claims**

1. An improved breaker structure employed between the carcass and tread portion of a pneumatic tire comprising:
   a layer of rubber matrix having a modulus of elasticity of from about 30 to 200 MPa; and
   a plurality of reinforcing filaments having an angular disposition relative to the median plane of the tire.

2. An improved breaker structure, as set forth in claim 1, wherein said reinforcing filaments are selected from the group consisting of coated and uncoated steel wire, braided steel cable and wrapped steel wire.

3. An improved breaker structure, as set forth in claim 2, wherein said filaments occupy a volume fraction of said rubber matrix of from about 4 to 23 percent.

4. An improved breaker structure, as set forth in claim 3, wherein the endcount of said filaments is about 8 to 25 per 2.5 cm.

5. An improved breaker structure, as set forth in claim 1, wherein said filaments are selected from the group consisting of synthetic monofilaments.

6. An improved breaker structure, as set forth in claim 5, wherein said filaments comprise aramid and occupy a volume fraction of said rubber matrix of from about 4 to 13 percent.

7. An improved breaker structure, as set forth in claim 6, wherein the endcount of said filaments is about 8 to 24 per 2.5 cm.

8. An improved breaker structure, as set forth in claim 5, wherein said filaments comprise polyester and occupy a volume fraction of said rubber matrix of from about 7 to 13 percent.

9. An improved breaker structure, as set forth in claim 8, wherein the endcount of said filaments is about 17 to 35 per 2.5 cm.

10. An improved breaker structure, as set forth in claim 1, wherein said rubber matrix comprises rubber selected from the group consisting of natural rubber, synthetic rubber and blends thereof.

11. An improved breaker structure, as set forth in claim 10, wherein said rubber matrix comprises 100 parts of natural rubber and up to about 70 parts of zinc dimethacrylate per hundred parts of rubber.

12. An improved breaker structure, as set forth in claim 11, wherein the modulus of said rubber compound is about 85 MPa.

13. An improved breaker structure, as set forth in claim 12, wherein said reinforcing filaments are selected from the group consisting of coated and uncoated steel wire, braided steel cable and wrapped steel wire and occupy a volume fraction of said rubber matrix of from about 4 to 23 percent.

14. An improved breaker structure, as set forth in claim 1, wherein said filaments occupy a lower volume fraction of said breaker than in existing breakers employing a rubber matrix of lower modulus.

15. An improved breaker structure, as set forth in claim 1, wherein the endcount of said filaments is lower than in existing breakers employing a rubber matrix of lower modulus.

16. An improved breaker structure, as set forth in claim 1, wherein said filaments occupy at least the same volume fraction of said breaker as in existing breakers employing a rubber matrix of lower modulus so as to impart greater performance properties to said tire.

17. An improved breaker structure, as set forth in claim 16, wherein said performance properties include cornering force coefficients and steering aligning torque.

FIG. 1

FIG. 3

FIG. 2

FIG. 4

CORNERING COEFFICIENT = $\dfrac{Fy}{P}$

FIG. 5

ALIGNING TORQUE COEFFICIENT = $\dfrac{AT}{P}$